(19) **Europäisches Patentamt**
**European Patent Office**
**Office européen des brevets**

(11) **EP 4 136 168 B1**

(12) **EUROPEAN PATENT SPECIFICATION**

(45) Date of publication and mention
of the grant of the patent:
**21.02.2024 Bulletin 2024/08**

(21) Application number: **21728829.9**

(22) Date of filing: **12.04.2021**

(51) International Patent Classification (IPC):
**C08L 67/02** *(2006.01)*

(52) Cooperative Patent Classification (CPC):
(C-Sets available)
**C08L 67/02;** C08L 2205/025; C08L 2205/03;
Y02W 90/10                                    (Cont.)

(86) International application number:
**PCT/EP2021/059408**

(87) International publication number:
**WO 2021/209369 (21.10.2021 Gazette 2021/42)**

(54) **BIODEGRADABLE POLYMER COMPOSITION FOR THE PRODUCTION OF MOLDED ITEMS**

BIOLOGISCH ABBAUBARE POLYMERZUSAMMENSETZUNG ZUR HERSTELLUNG VON FORMKÖRPERN

COMPOSITION POLYMÈRE BIODÉGRADABLE POUR LA PRODUCTION D'ARTICLES MOULÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.04.2020 IT 202000007963**

(43) Date of publication of application:
**22.02.2023 Bulletin 2023/08**

(73) Proprietor: **Novamont S.p.A.**
**28100 Novara (IT)**

(72) Inventors:
• **BASTIOLI, Catia**
**28100 Novara (IT)**
• **GESTI GARCIA, Sebastià**
**10100 Torino (IT)**
• **MILIZIA, Tiziana**
**28100 Novara (IT)**

• **NICOLINI, Matteo**
**28021 Borgomanero (NO) (IT)**

(74) Representative: **Zanoli, Enrico et al**
**Zanoli & Giavarini S.p.A.**
**Via Melchiorre Gioia, 64**
**20125 Milano (IT)**

(56) References cited:
**EP-A1- 3 140 350      WO-A1-2018/210609
WO-A1-2019/034515**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 67/02, C08K 3/346, C08K 5/20, C08L 67/02, C08L 67/04**

**Description**

The present invention relates to a polymer composition which is biodegradable in industrial composting and is particularly suitable for use in the manufacture of molded articles in particular by injection molding.

The present invention also relates to articles obtained from said composition, as well as to the process for obtaining them.

As is known, hot-molding techniques for plastics, such as injection molding, are mainly used for the production of articles with a high resistance to deformation, such as disposable cutlery, containers, trays, plates or capsules for dispensing beverages, having wall thicknesses typically in excess of 200 microns.

While the manufacture of thick articles imparts the necessary properties of resistance to deformation, it also creates difficulties in ensuring that articles made from polymers that are inherently biodegradable can disintegrate in such a way that they can effectively be delivered to industrial composting plants.

In view of the above, it would therefore be desirable to have a composition capable of being economically and productively processed into thick-walled molded articles without jeopardizing their disintegration in industrial composting.

Polymer blends currently on the market are typically made from aliphatic and/or aliphatic-aromatic polyesters and lactic acid polymers, such as those described in US Patent 6,573,340 and Patent Application WO 2005/063883. However, injection molded articles made from these compositions do not fully meet the requirements for high temperature resistance to deformation, elastic modulus and disintegrability. One solution might be the use of fillers that improve the dimensional stability of the molded articles. EP 3 328 940 B1 by the present applicant describes polymer compositions comprising poly (1,4-butylene succinate) (PBS), polylactic acid (PLA), a cross-linking agent and talc (a filler). Although the physical and mechanical characteristics of these compositions make them suitable for molding applications, these compositions do not meet the disintegration requirement according to European standard EN13432 when the part is thicker than 500 microns.

Patent application US 2013/0004759 describes an injection-molded article comprising a biodegradable polyester (PBS copolymer), PLA and a mineral filler. If this filler is talc, the composition has a high elastic modulus but is characterized by biodegradation kinetics that are not compatible with harmonized standard EN13432. If the filler is replaced by gypsum, it is biodegradable according to EN13432 but shows a decrease in elastic modulus. WO 2019/034515 A1 relates to an injection molded article. Examples 9 and 12 in table 2 describe compositions comprising 55% of PBS, 25% of polylactic acid (PLA) Ingeo 3251D and 10% of filler.

Starting from the need to find a balance between high resistance to deformation at high temperature, elastic modulus and high disintegration in industrial composting, it has now surprisingly been found that it is possible to solve this problem by means of a composition comprising biodegradable polyesters, inorganic fillers and polyhydroxyalkanoates with specific characteristics.

Molded articles comprising the composition according to the present invention are characterized by a level of heat resistance compatible with what is required by the application, and therefore do not require to be subjected to a heat annealing treatment at temperatures between 60 and 120 °C to ensure functionality.

The present invention relates in particular to a biodegradable polymer composition for the production of molded articles comprising, with respect to the total composition:

   i) 5-70% by weight, with respect to the sum of components i.-v., of at least one polyester comprising:

      a. a dicarboxylic component comprising, in relation to the total dicarboxylic component,

         (a1) 0-20% by moles, preferably 0-10% by moles, of units derived from at least one aromatic dicarboxylic acid
         (a2) 53-95% by moles of succinic acid units,
         (a3) 5-27% by moles of units derived from at least one saturated $C_5$-$C_{24}$ dicarboxylic acid

      b. a diol component comprising, compared to the total diol component:

         (b1) 95-100% by moles, preferably 97-100% by moles, of units derived from at least one saturated aliphatic diol;
         (b2) 0-5% by moles, preferably 0-3% by moles, of units derived from at least one unsaturated aliphatic diol;

   ii) 0-40 % by weight, with respect to the sum of components i.-v., of at least one polyester comprising:

      c. a dicarboxylic component having 100% by moles of succinic acid
      d. a diol component comprising, compared to the total diol component:

(d1) 95-100% by moles, preferably 97-100% by moles, of units derived from at least one saturated aliphatic diol;

(d2) 0-5% in moles, preferably 0-3% by moles, of units derived from at least one unsaturated aliphatic diol;

iii) 23-43% by weight of the sum of components i.-v., of at least one polyhydroxyalkanoate;

iv) 10-20% by weight, relative to the sum of components i.-v., of at least one filler.

v) 0 - 0.5% by weight, relative to the sum of components i.-v., of at least one cross-linking agent and/or chain extender;

wherein component iii. has a melting point (Tm$_2$) ≥160°C and a (ΔHm) ≥10 J/g.

Component i. is present in the final composition from 5% to 70% by weight with respect to the sum of components i.v.. In a preferred aspect of the invention component i. is present in the final composition from 15% to 65% by weight with respect to the sum of components i.v.; even more preferably from 25% to 60% by weight with respect to the sum of components i.v. With respect to polyesters i) of the composition according to the present invention, these comprise a dicarboxylic component comprising, with respect to the total dicarboxylic component, 0-20% by moles, preferably 0-10% by moles of units derived from at least one aromatic dicarboxylic acid ( component a1) and 53-95% by moles of succinic acid units,( component a2) 5-27% by moles of saturated dicarboxylic acid units other than succinic acid of one or more C$_5$-C$_{24}$ dicarboxylic acids ( component a3)

The aromatic dicarboxylic acids are preferably selected from aromatic dicarboxylic acids of the phthalic acid type, preferably terephthalic acid or isophthalic acid, more preferably terephthalic acid, and heterocyclic aromatic dicarboxylic compounds, preferably 2,5-furandicarboxylic acid, 2,4-furandicarboxylic acid, 2,3-furandicarboxylic acid, 3,4-furandicarboxylic acid, more preferably 2,5-furandicarboxylic acid, their esters, salts and mixtures thereof.

In a preferred embodiment, these aromatic dicarboxylic acids include:

- 1 to 99% by moles, preferably 5 to 95% and more preferably 10 to 80%, of terephthalic acid, its esters or salts;
- 99 to 1% by moles, preferably 95 to 5% and more preferably 90 to 20%, of 2,5-furandicarboxylic acid, its esters or salts.

Preferably, the saturated aliphatic dicarboxylic acids other than succinic acid (component a3) are selected from C$_5$-C$_{24}$, preferably C$_5$-C$_{13}$, more preferably C$_7$-C$_{11}$ saturated dicarboxylic acids, their C$_1$-C$_{24}$, preferably C$_1$-C$_4$, alkyl esters, their salts and mixtures thereof. Preferably, the saturated aliphatic dicarboxylic acids are selected from: succinic acid (component a2), 2-ethylsuccinic acid, glutaric acid, 2-methylglutaric acid, adipic acid, pimelic acid, suberic acid, azelaic acid, sebacic acid, undecandioic acid, dodecandioic acid, brassylic acid, and C$_{1-24}$ alkyl esters thereof.

Unsaturated aliphatic dicarboxylic acids may also optionally be present in amounts between 0 and 5% by moles, preferably between 0.1 and l% by moles. These are preferably selected from itaconic acid, maleic acid, fumaric acid, 4-methylene-pimelic acid, 3,4-bis(methylene) nonandioic acid, 5-methylene-nonandioic acid, their C$_1$-C$_{24}$, preferably C$_1$-C$_4$, alkyl esters, their salts and mixtures thereof.

Even more preferably, the dicarboxylic component of polyesters i. in the composition according to the present invention consists of saturated aliphatic dicarboxylic acids.

In an even more preferred embodiment of the present invention, the saturated aliphatic dicarboxylic acid other than succinic acid is azelaic acid.

The diol component of the polyesters of the composition according to the present invention comprises, with respect to the total diol component, 95-100% by moles, preferably 97-100% by moles, of units derived from at least one saturated aliphatic diol (component b1) and 0-5% by moles, preferably 0-3% by moles, with respect to the total diol component, of units derived from at least one unsaturated aliphatic diol (component b2).

In a preferred embodiment, the diol component of the polyesters of the composition according to the present invention consists of saturated aliphatic diols.

As for the saturated aliphatic diols, these are preferably selected from 1,2-ethanediol, 1,2-propanediol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,4-cyclohexanedimethanol, neopentylglycol, 2-methyl-1,3-propanediol, dianhydrosorbitol, dianhydromannitol, dianhydroiditol, cyclohexanediol, cyclohexanmethanediol, dialkylene glycols and polyalkylene glycols of molecular weight 100-4000 such as polyethylene glycol, polypropylene glycol and mixtures thereof. Preferably, the diol component comprises at least 50% in moles of one or more diols selected from 1,2-ethanediol, 1,3-propanediol, 1,4-butanediol. In a preferred embodiment of the present invention the saturated aliphatic diol is 1,4-butanediol.

The unsaturated aliphatic diols of polyester i. in the composition according to the present invention are preferably selected from cis-2-buten-1,4-diol, trans 2-buten-1,4-diol, 2-butyn-1,4-diol, cis 2-penten-1,5-diol, trans-2-penten-1.5-diol, 2-pentyn-1.5-diol, cis-2-hexen-1,6-diol, trans-2-hexen-1,6-diol, 2-hexyn-1,6- diol, cis-3-hexen-1,6-diol, trans 3-hexen-1,6-diol, 3-hexyn-1,6-diol.

As regards polyesters i. in the composition, these are preferably selected from aliphatic polyesters (AP) and aliphatic-aromatic polyesters (AAPE).

Within the meaning of the present invention, aliphatic polyesters (AP) are understood to mean polyesters comprising a dicarboxylic component consisting, with respect to the total moles of the dicarboxylic component, of 53-95% by moles of succinic acid units, 5-27% by moles of saturated dicarboxylic acid units other than succinic acid of one or more C5-C24 dicarboxylic acids" and 0-5% by moles of at least one unsaturated aliphatic dicarboxylic acid and a diol component comprising, with respect to the total moles of the diol component, 95-100% by moles of units derived from at least one saturated aliphatic diol and 0-5% by moles of units derived from at least one unsaturated aliphatic diol.

In the present invention, aliphatic-aromatic polyesters (AAPEs) are defined as polyesters comprising a dicarboxylic component consisting of at least one aromatic dicarboxylic compound, In particular 0-20% by moles, preferably 0-10% by moles, of units derived from at least one aromatic dicarboxylic acid" succinic acid, optionally a saturated $C_5$-$C_{24}$ dicarboxylic acid and 0-5% by moles, with respect to the total moles of the dicarboxylic component, of at least one unsaturated aliphatic dicarboxylic acid and a diol component comprising, with respect to the total moles of the diol component, 95-100% by moles of units derived from at least one saturated aliphatic diol and 0-5% by moles of units derived from at least one unsaturated aliphatic diol.

In a preferred embodiment of the present invention, polyester i. in the composition comprises at least one aliphatic polyester (AP), preferably poly(1,4-butylene adipate-co-1,4-butylene succinate), poly(1,4-butylene azelate-co-1,4-butylene succinate), poly(1,4-butylene sebacate-co-1,4-butylene succinate), poly(1,4-butylene succinate-co-1,4-butylene adipate-co-1,4-butylene azelate), poly(1,4-butylene succinate-co-1,4-butylene adipate-co-1,4-butylene sebacate), poly(1,4-butylene succinate-co-1,4-butylene azelate-co-1,4-butylene sebacate).

In a particularly preferred embodiment said aliphatic polyester is poly (1,4-butylene succinate-co-1,4-butylene azelate).

Polyesters i. in the composition according to the present invention may comprise, in addition to the dicarboxylic component and the diol component, repetitive units derived from at least one hydroxy acid in an amount of between 0-49%, preferably between 0-30%, by moles relative to the total moles of the dicarboxylic component. Examples of convenient hydroxy acids are glycolic acid, hydroxybutyric acid, hydroxycaproic acid, hydroxyvaleric acid, 7-hydroxyheptanoic acid, 8-hydroxycaproic acid, 9-hydroxynonanoic acid, lactic acid or lactide. The hydroxy acids can be inserted into the chain as such or as prepolymers/oligomers, or they can also be reacted with diacids or diols beforehand.

Long molecules with two functional groups not in the terminal position may also be added, in an amount not exceeding 10% by moles to the total moles of the dicarboxylic component. Examples are dimeric acids, ricinoleic acid and acids having epoxy groups and also polyoxyethylenes with molecular weights between 200 and 10,000.

Diamines, amino acids or amino alcohols may also be present in percentages of up to 30% of the total moles of the dicarboxylic component.

In the process of preparing polyesters i. in the composition according to the present invention, one or more molecules with multiple functional groups may also be advantageously added, in amounts between 0.05 and 3% by moles with respect to the total moles of the dicarboxylic component (as well as any hydroxy acids), in order to obtain branched products. Examples of such molecules are glycerol, pentaerythritol, trimethylolpropane, citric acid, dipentaerythritol, monoanhydrosorbitol, monohydromannitol, acid triglycerides, polyglycerols, etc.

The molecular weight Mn of polyesters i. is preferably $\geq$ 20000, more preferably $\geq$ 40000. With regard to the polydispersity index of the molecular weights, Mw / Mn, this is preferably between 1.5 and 10, more preferably between 1.6 and 5 and even more preferably between 1.8 and 2.7.

The molecular weights Mn and Mw can be measured by Gel Permeation Chromatography (GPC). The determination can be carried out with the chromatographic system held at 40 °C, using a set of two columns in series (particle diameters of 5 $\mu$m and 3 $\mu$m with mixed porosity), a refractive index detector, chloroform as eluent (flow rate 0.5 ml/min) and using polystyrene as the reference standard.

The terminal acid groups content of the polyesters of the composition according to the present invention is preferably between 30 and 160 meq/kg.

The terminal acid groups content can be measured as follows: 1.5-3 g of the polyester is placed in a 100 ml conical flask together with 60 ml of chloroform. After complete dissolution of the polyester, there are added 25 ml of 2-propanol and, immediately before analysis, 1 ml of deionized water. The resulting solution is titrated with a previously standardized solution of NaOH in ethanol. An appropriate indicator, such as a glass electrode for acid-base titration in non-aqueous solvents, is used to determine the equivalence point of the titration. The terminal acid groups content is calculated from the consumption of NaOH solution in ethanol according to the following equation:

$$\text{Terminal acid groups content (meq/kg polymer)} = \frac{\left[(V_{eq} - V_b) \cdot T\right] \cdot 1000}{P}$$

where:

Veq = ml of NaOH solution in ethanol at the equivalence point of the sample titration;
Vb = ml of NaOH solution in ethanol required to achieve pH = 9.5 during the blank titration;
T = concentration of NaOH solution in ethanol expressed in moles/liter;
P = weight of sample in grams.

Preferably, polyesters i. have an inherent viscosity (measured with a Ubbelohde viscometer for solutions in $CHCl_3$ of concentration 0.2 g/dl at 25 °C) above 0.3 dl/g, preferably between 0.3 and 2 dl/g, more preferably between 0.4 and 1.4 dl/g.

Preferably, polyesters i. are biodegradable. For the purposes of the present invention, a biodegradable polymer is understood to be a polymer that is biodegradable according to EN 13432.

Said polyesters i. can be synthesized by any of the processes known in the state of the art. In particular, they may advantageously be obtained by a polycondensation reaction.

The synthesis process can advantageously be carried out in the presence of a suitable catalyst. Suitable catalysts include organometallic tin compounds such as stannoic acid derivatives, titanium compounds such as ortho-butyl titanate, aluminum, antimony, zinc and zirconium compounds.

As regards polyesters ii. of the composition according to the present invention, these comprise a dicarboxylic component that is 100% succinic acid (component c).

Component (c) of polyester ii is present from 0-40% by weight with respect the sum of components i.-v.

In a preferred aspect of the invention polyester ii. is present from 0 to 30% with respect to the sum of components i.v..

In a particularly preferred embodiment of the invention the biodegradable polymeric composition comprises a mixture of poly(1,4-butylene succinate-co-1,4-butylene azelate) (polyester i.)) and poly(1,4-butylene succinate) (polyester ii.)) where the amount of poly (1,4-butylene succinate) is between 0 and 40% by weight, preferably between 0 and 30%, while poly(1,4-butylene succinate-co-1,4-butylene azelate) is present in an amount between 5 and 70%, preferably between 15 and 65%, even more preferably between 25 and 60% by weight with respect to the sum of the two polymers.

The diol component of the polyesters ii. (component d) of the composition according to the present invention comprises, with respect to the total diol component, 95-100% by moles, preferably 97-100% by moles, of units derived from at least one saturated aliphatic diol (component d1) and 0-5% by moles, preferably 0-3% by moles, with respect to the total diol component, of units derived from at least one unsaturated aliphatic diol (component d2).

In a preferred embodiment, the diol component of the polyesters of the composition according to the present invention consists of saturated aliphatic diols.

As for the saturated aliphatic diols, these are preferably selected from 1,2-ethanediol, 1,2-propanediol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,4-cyclohexanedimethanol, neopentylglycol, 2-methyl-1,3-propanediol, dianhydrosorbitol, dianhydromannitol, dianhydroiditol, cyclohexanediol, cyclohexanmethanediol, dialkylene glycols and polyalkylene glycols of molecular weight 100-4000 such as polyethylene glycol, polypropylene glycol and mixtures thereof. Preferably, the diol component comprises at least 50% in moles of one or more diols selected from 1,2-ethanediol, 1,3-propanediol, 1,4-butanediol. In a preferred embodiment of the present invention the saturated aliphatic diol is 1,4-butanediol.

The unsaturated aliphatic diols of polyester ii. in the composition according to the present invention are preferably selected from cis-2-buten-1,4-diol, trans 2-buten-1,4-diol, 2-butyn-1,4-diol, cis 2-penten-1,5-diol, trans-2-penten-1.5-diol, 2-pentyn-1.5-diol, cis-2-hexen-1,6-diol, trans-2-hexen-1,6-diol, 2-hexyn-1,6- diol, cis-3-hexen-1,6-diol, trans 3-hexen-1,6-diol, 3-hexyn-1,6-diol.

The composition according to the present invention, in order to provide the molded articles with a high resistance high-temperature deformation and elastic modulus comprises at least one polyhydroxyalkanoate (component iii.) preferably selected from the group consisting of polyesters of lactic acid, polyhydroxybutyrate, polyhydroxybutyrate-valerate, polyhydroxybutyrate-propanoate, polyhydroxybutyrate-hexanoate, polyhydroxybutyrate-decanoate, polyhydroxybutyrate-dodecanoate, polyhydroxybutyrate-hexadecanoate, polyhydroxybutyrate-octadecanoate, poly 3-hydroxybutyrate-4-hydroxybutyrate. Preferably, the polyhydroxyalkanoate of the composition comprises at least 70% by weight of one or more polyesters of lactic acid.

In a particularly preferred embodiment of the present invention the lactic acid polyester comprises at least 97% w/w of units derived from L-lactic acid, $\leq$ 3% w/w of repeating units derived from D-lactic acid, has a Melting point ($Tm_2$) in the range 160-200°C, more preferably 160-180°C, a Glass Transition Temperature (Tg) in the range 55-65°C and an MFR (measured according to standard ASTM-D1238 at 210°C and 2.16 kg) in the range 20-100 g/10 min.

Commercial examples of lactic acid polyesters having these properties include Ingeo™ Biopolymer 3251D brand products and Luminy® L130 brand products.

Said polyhydroxyalkanoate iii. is present in the composition between 23% and 43% with respect components i.-v. In a particularly preferred aspect of the invention aid polyhydroxyalkanoate iii. is present from 25% and 35% with respect the sum of the components i.-v.

Said polyhydroxyalkanoate iii. is characterized by an enthalpy of fusion (ΔHm) which is greater than 10 J/g. The enthalpy of fusion (ΔHm) is advantageously determined by differential scanning calorimetry (DSC) using a Perkin Elmer Pyris Diamond calorimeter under the conditions given below:

- 60 s isotherm at -20°C
- 1st scan from -20°C to 200°C at 20°C/min
- 60 s isotherm at 200°C
- 2nd scan from 200°C to - 20°C at 10°C/min
- 60 s isotherm at -20°C
- 3rd scan -20°C to 200°C at 20°C/min

The enthalpy of melting (ΔHm) is measured as the area of the endothermic peak corresponding to the polyhydroxyalkanoate melt found in the third scan using the PyrisTM software from Perkin Elmer, specially designed to process DSC diagrams. The melting point (Tm$_2$) is the maximum of the endothermic peak corresponding to the polyhydroxyalkanoate melt found in the third scan.

More preferably the enthalpy of fusion (ΔHm) is between 10 and 93 J/g, more preferably 10 and 50 J/g.

Particularly preferred is polymer composition comprising a mixture of an aliphatic polyester with a dicarboxylic unit comprising succinic acid (component ii.) and an aliphatic copolyester with a dicarboxylic unit comprising succinic acid and a saturated dicarboxylic acid other than succinic acid of one or more $C_5$-$C_{24}$ dicarboxylic acids (component i). This composition results in articles having improved heat resistance.

This means that the composition of the present invention permits obtaining articles having no need for annealing.

In the composition according to the present invention, the filler (component iv.) helps to improve the dimensional stability of the molded objects according to the present invention and is preferably selected from kaolin, wollastonite, barytes, clay, talc, calcium and magnesium carbonates, iron and lead carbonates, aluminum hydroxide, diatomaceous earth, aluminum sulfate, barium sulfate, silica, mica, titanium dioxide, starch, chitin, chitosan, alginates, proteins such as gluten, zein, casein, collagen, gelatin and natural gums.

The term starch is understood here to mean all types of starch, namely: flour, native starch, hydrolyzed starch, de-structured starch, gelatinized starch, plasticized starch, thermoplastic starch, biofillers comprising complexed starch or mixtures thereof. Particularly suitable according to the invention are starches such as potato, maize, tapioca and pea starch.

Particularly advantageous are starches that can be easily deconstructed and have high initial molecular weights, such as potato or maize starch.

In a preferred embodiment of the present invention, the filler comprises talc, calcium carbonate, silica, kaolin, wollastonite or mixtures thereof, present in the form of particles having an arithmetic mean diameter, measured across the major axis of the particle, of less than 10 microns. The concentration of filler (component iv.) is particularly relevant and should be between 10 and 20%, more preferably between 10.1 and 18%, even more preferably between 12 and 18% by weight with respect to components i.-v..

The composition according to the present invention may further comprise 0-5% of at least one cross-linking agent and/or chain extender (component v.) in order to improve stability to hydrolysis.

Said cross-linking agent and/or chain extender is selected from compounds having two or more functional groups bearing isocyanate, peroxide, carbodiimide, isocyanurate, oxazoline, epoxide, anhydride, divinylether groups and mixtures thereof.

The compounds having two or more functional groups bearing isocyanate groups are preferably selected from p-phenylene diisocyanate, 2,4-toluene diisocyanate, 2,6-toluene diisocyanate, 4,4-diphenylmethane diisocyanate, 1,3-phenylene-4-chloro diisocyanate, 1,5-naphthalene diisocyanate, 4,4-diphenylene diisocyanate, 3,3'-dimethyl-4,4-diphenylmethane diisocyanate, 3-methyl-4,4'-diphenylmethane diisocyanate, diphenylester diisocyanate, 2,4-cyclohexane diisocyanate, 2,3-cyclohexane diisocyanate, 1-methyl-2,4-cyclohexyl diisocyanate, 2,6-cyclohexyl diisocyanate, bis(isocyanate cyclohexyl) methane, 2,4,6-toluene triisocyanate, 2,4,4-diphenylether triisocyanate, polymethylene-polyphenyl-polyisocyanates, methylene diphenyl diisocyanate, triphenylmethane triisocyanate, 3,3'-ditolylene-4,4-diisocyanate, 4,4'-methylenebis(2-methylphenyl isocyanate), hexamethylene diisocyanate, 1,3-cyclohexylene diisocyanate, 1,2-cyclohexylene diisocyanate and mixtures thereof.

In a preferred embodiment the compound bearing isocyanate groups is 4,4-diphenylmethane-diisocyanate.

As regards compounds having two or more functional groups bearing peroxide groups, these are preferably selected from benzoyl peroxide, lauroyl peroxide, isononanoyl peroxide, di(t-butylperoxyisopropyl)benzene, t-butyl peroxide, dicumyl peroxide, alpha,alpha'-di(t-butylperoxy)diisopropylbenzene, 2,5-dimethyl-2,5-di(t-butylperoxy)hexane, t-butyl cumyl peroxide, di-t-butyl peroxide, 2,5-dimethyl-2,5-di(t-butylperoxy)hex-3-yne, di(4-t-butylcyclohexyl)peroxy dicarbonate, dicetyl peroxydicarbonate, dimyristyl peroxydicarbonate, 3,6,9-triethyl-3,6,9-trimethyl-1,4,7-triperoxonane, di(2-ethylhexyl) peroxydicarbonate and mixtures thereof.

The compounds having two or more functional groups bearing carbodiimide groups which are preferably used in the composition according to the present invention are chosen from poly(cyclooctylene carbodiimide), poly(1,4-dimethylcyclohexylene carbodiimide), poly(cyclohexylene carbodiimide), poly(ethylene carbodiimide), poly(butylene carbodiimide), poly(isobutylene carbodiimide), poly(nonylene carbodiimide), poly(dodecylene carbodiimide), poly(neopentylene carbodiimide), poly(1,4-dimethylene phenylene carbodiimide), poly(2,2',6,6-tetraisopropyldiphenylene carbodiimide) (Stabaxol® D), poly(2,4,6-triisolpropyl-1,3-phenylene carbodiimide) (Stabaxol® P-100), poly(2,6-diisopropyl-1,3-phenylene carbodiimide) (Stabaxol® P), poly(tolyl carbodiimide), poly(4,4'- diphenylmethane carbodiimide), poly(3,3'-dimethyl-4,4'-biphenylene carbodiimide), poly(p-phenylene carbodiimide), poly(m-phenylene carbodiimide), poly(3,3'-dimethyl-4,4'-diphenylmethane carbodiimide), poly(naphthylene carbodiimide), poly(isophorone carbodiimide), poly(cumene carbodiimide), p-phenylene bis(ethylcarbodiimide), 1,6-hexamethylene bis(ethylcarbodiimide), 1,8-octamethylene bis(ethylcarbodiimide), 1,10-decamethylene bis(ethylcarbodiimide), 1,12 dodecamethylene bis(ethylcarbodiimide) and mixtures thereof.

Examples of compounds having two or more functional groups bearing epoxide groups which may be advantageously used in the composition according to the present invention are all polyepoxides from epoxidized oils and/or styrene-glycidyl ether-methyl methacrylate, glycidyl ether methyl methacrylate, within a molecular weight range from 1000 to 10,000 and having an epoxide number per molecule in the range from 1 to 30 and preferably 5 to 25, and the epoxides selected from the group comprising: diethylene glycol diglycidyl ether, polyethylene glycol diglycidyl ether, polyglycerol polyglycidyl ether, 1,2-epoxybutane, polyglycerol polyglycidyl ether, isoprene diepoxide, and cycloaliphatic diepoxides, 1,4-cyclohexanedimethanol diglycidyl ether, glycidyl 2-methylphenyl ether, glycerol propoxylatotriglycidyl ether, 1,4-butanediol diglycidyl ether, sorbitol polyglycidyl ether, glycerol diglycidyl ether, tetraglycidyl ether of meta-xylenediamine and diglycidyl ether of bisphenol A and mixtures thereof.

Along with the compounds of compounds having two or more functional groups bearing isocyanate, peroxide, carbodiimide, isocyanurate, oxazoline, epoxide, anhydride or divinylether groups such as those described above, catalysts may also be used to increase the reactivity of the reactive groups. In the case of polyepoxides, fatty acid salts are preferably used, even more preferably calcium and zinc stearates.

In addition to the components i-v. mentioned above, the composition according to the present invention preferably also contains at least one other component (component vi.) selected from the group consisting of plasticizers, UV stabilizers, lubricants, nucleating agents, surfactants, antistatic agents, pigments, flame retardants, compatibilizing agents, lignin, organic acids, antioxidants, anti-mildew agents, waxes, process aids and polymer components preferably selected from the group consisting of vinyl polymers, diol diacid polyesters other than polyesters i. and ii. described above, polyamides, polyurethanes, polyethers, polyureas or polycarbonates.

With regard to plasticizers, the composition according to the present invention preferably includes one or more plasticizers selected from the group consisting of water and polyols having from 2 to 22 carbon atoms, phthalates, such as for example diisononyl phthalate, trimellitates, such as for example trimellitic acid esters with $C_4$-$C_{20}$ mono-alcohols preferably selected from the group consisting of n-octanol and n-decanol, and aliphatic esters having the following structure:

$$R_1\text{-O-C(O)-}R_4\text{-C(O)-[-O-}R_2\text{-O-C(O)-}R_5\text{-C(O)-]}_m\text{-O-}R_3$$

in which:

$R_1$ is selected from one or more of the groups formed of H, linear and branched, saturated and unsaturated alkyl residues of the $C_1$-$C_{24}$ type, polyol residues esterified with $C_1$-$C_{24}$ monocarboxylic acids;
$R_2$ comprises -$CH_2$-$C(CH_3)_2$-$CH_2$- and alkylene $C_2$-$C_8$ groups, and consists of at least 50% in moles of said -$CH_2$-$C(CH_3)_2$-$CH_2$- groups;
$R_3$ is selected from one or more of the groups formed of H, linear and branched, saturated and unsaturated alkyl residues of the $C_1$-$C_{24}$ type, polyol residues esterified with $C_1$-$C_{24}$ monocarboxylic acids;
$R_4$ and $R_5$ are the same or different, comprise one or more $C_2$-$C_{22}$, preferably $C_2$-$C_{11}$, more preferably $C_4$-$C_9$ alkenes, and comprise at least 50% in moles of $C_7$ alkenes;
m is an integer between 1 and 20, preferably 2-10, more preferably 3-7.

Preferably, in said esters at least one of the groups $R_1$ and/or $R_3$ comprises, preferably in an amount ≥ 10% by moles, more preferably ≥ 20%, even more preferably ≥ 25% by moles, with respect to the total amount of $R_1$ and/or $R_3$ groups, polyol residues esterified with at least one $C_1$-$C_{24}$ monocarboxylic acid selected from the group consisting of stearic acid, palmitic acid, 9-ketostearic acid, 10-ketostearic acid and mixtures thereof. Examples of such aliphatic esters are described in Italian patent application MI2014A000030 and international patent applications WO 2015/104375 and WO 2015/104377.

When present, selected plasticizers are preferably present up to 10% by weight, relative to the total weight of the composition.

Preferably, lubricants are chosen from esters and metal salts of fatty acids such as, for example, zinc stearate, calcium stearate, aluminum stearate and glyceryl stearate. Preferably, the composition according to the present invention comprises up to 1% by weight of lubricants, more preferably up to 0.5% by weight, relative to the total weight of the composition.

Examples of nucleating agents include saccharin sodium salt, calcium silicate, sodium benzoate, calcium titanate, boron nitride, isotactic polypropylene, low molecular weight PLA. These additives are preferably added in quantities of up to 10% by weight and more preferably between 2 and 6% by weight, relative to the total weight of the composition.

Pigments may also be added if necessary, e.g. titanium dioxide, clays, copper phthalocyanine, titanium dioxide, silicates, iron oxides and hydroxides, carbon black, and magnesium oxide. These additives are preferably added up to 10% by weight.

Process aids are preferably fatty acid amides such as stereamide, behenamide, erucamide, oleamide, ethylene bis stearamide, ethylene bis oleamide and derivatives.

The polymer composition of the invention may contain as further additions vinyl polymers, polyamides, polycarbonates, polyethers and diol acid polyesters other than polyesters i. and ii.. Preferred vinyl polymers include polyethylene, polypropylene, their copolymers, polyvinyl alcohol, polyvinyl acetate, polyethyl vinyl acetate and polyethylene vinyl alcohol, polystyrene, chlorinated vinyl polymers, polyacrylates.

Chlorinated vinyl polymers include, in addition to polyvinyl chloride, polyvinylidene chloride, polyethylene chloride, poly(vinyl chloride - vinyl acetate), poly(vinyl chloride - ethylene), poly(vinyl chloride - propylene), poly(vinyl chloride - styrene), poly(vinyl chloride - isobutylene) as well as copolymers in which polyvinyl chloride accounts for more than 50% in moles. Said copolymers may be random, block or alternating.

With regard to the polyamides of the composition according to the present invention, these are preferably selected from the group consisting of polyamide 6 and 6,6, polyamide 9 and 9,9, polyamide 10 and 10,10, polyamide 11 and 11,11, polyamide 12 and 12,12 and combinations thereof of the types 6/9, 6/10, 6/11, 6/12, their blends and copolymers, both random and block. Preferably, the polycarbonates of the composition according to the present invention are selected from the group consisting of polyalkylene carbonates, more preferably polyethylene carbonates, polypropylene carbonates, polybutylene carbonates, mixtures thereof and both random and block copolymers.

Among the polyethers, those preferred are selected from the group consisting of polyethylene glycols, polypropylene glycols, polybutylene glycols their copolymers and their mixtures with molecular weights from 70000 to 500000.

As regards diacid diol polyesters other than polyesters i., these preferably include:

e. a dicarboxylic component comprising, in relation to the total dicarboxylic component,

(e1) 20-100% by moles of units derived from at least one aromatic dicarboxylic acid,
(e2) 0-80% by moles of units derived from at least one saturated aliphatic dicarboxylic acid,
(e3) 0-5% by moles of units derived from at least one unsaturated aliphatic dicarboxylic acid;

f. a diol component comprising, compared to the total diol component,

(f1) 95-100% by moles of units derived from at least one saturated aliphatic diol;
(f2) 0-5% by moles of units derived from at least one unsaturated aliphatic diol.

Preferably, aromatic dicarboxylic acids e1, saturated aliphatic dicarboxylic acids e2, unsaturated aliphatic dicarboxylic acids e3, saturated aliphatic diols d1 and unsaturated aliphatic diols f2 for said polyesters are selected from those described above for polyester i. of the composition according to the present invention.

More preferably, said diacid-diol polyesters other than polyester i) are selected from the group consisting of polyethylene terephthalate), polypropylene terephthalate), poly(butylene terephthalate), poly(ethylene 2,5-furandicarboxylate), polypropylene 2,5-furandicarboxylate), poly(butylene 2,5-furandicaboxylate) and block or random copolymers of the poly(alkylene 2,5-furandicarboxylate-co-alkylene terephthalate) type.

The process of producing the polymer composition according to the present invention may be carried out according to any of the processes known in the state of the art.

Advantageously, the polymer composition according to the present invention is produced by extrusion processes in which the polymer components are mixed in a molten state. In extruding the composition, the components may be fed all together or one or more of the components may be fed separately along the extruder.

The present invention also relates to high-thickness ($\geq 500\ \mu m$) molded articles comprising said polymer composition, which has processing and performance characteristics that make it particularly suitable for this use. Its characteristics allow the production of molded articles with good resistance to deformation at high temperature, high dimensional stability, high deflection temperature under load and the ability to disintegrate in industrial composting processes.

For example, the polymer composition according to the invention is particularly suitable for the manufacture of molded articles such as, for example, disposable cutlery, plates and cups, rigid containers, caps for dispensing beverages, preferably hot beverages, caps and lids, packaging for food which can be heated in conventional and microwave ovens.

The composition according to the present invention and the molded articles comprising it are preferably characterized by a THF content of less than 30 mg/kg, preferably less than 10 mg/kg, and more preferably < 5 mg/kg, thereby being capable of being used in contact with food, as is the case, for example, in disposable cutlery.

The polymer composition according to the present invention has the additional advantage that it can be processed in conventional machinery without requiring substantial changes in the usual processing conditions, in comparison with other conventional polymers such as, for example, polyethylene, polypropylene, polystyrene and ABS. For example, objects having dimensions such as a maximum thickness of the order of 1 millimeter, a width of 70 mm and a length of 80 mm can be molded using a melt temperature of 210°C, a filling pressure of 1400 bar, a cooling time of 6 sec and a cycle time of 12 sec.

In contrast to the molded articles known in the art, the composition according to the present invention surprisingly makes it possible to obtain articles which do not need annealing heat treatments to become heat resistant. This feature is particularly desirable because it allows for significant advantages from a production point of view. In particular, for the production of articles of thicknesses $\geq 500$ micron, preferably $\geq 800$ micron, temperatures even higher than 120 °C must be used for several minutes.

Preferably, the injection molded articles are characterized by conservative elastic modulus (G') values at 70°C of over 100 MP, more preferably greater than 120 MPa, even more preferably greater than 130 MPa, measured on a rectangular-shaped specimen of 30x6x1 mm obtained from a 70x80x1 mm injection molded plate by means of dynamic mechanical analysis (DMTA) according to ASTM D5279-13 (Temperature Sweep test performed in torsional mode, Frequency = 1 Hz, Oscillation amplitude = 0.1% Strain. Heating rate = 3°C/min from 30 to 120°C).

According to the present invention, "heat-resistant articles without the need for annealing" means products characterized by a conservative modulus of elasticity (G') at 70°C of more than 100 MPa.

Preferably, injection molded articles and thermoformed articles comprising the biodegradable composition according to the present invention are to be considered disintegrable according to EN13432 with thicknesses up to 1 mm.

The composition according to the present invention can also be used for articles produced by thermoforming such as containers, trays, plates, beverage dispensing capsules and printed circuit boards for electronics.

The invention will now be illustrated with a few examples of embodiments, which are intended to illustrate but not limit the scope of protection of the present patent application.

<u>LEGENDA</u>

In the examples the different components present in the polymer composition of the invention are the following :

i-1 = Poly(1,4-butylene succinate-co-azelate) ("PBSAz10")

i-2 = Poly(1,4-butylene succinate-co-azelate) ("PBSAz20")

ii-1 = Poly(1,4-butylene succinate) ("PBS").

iii-1 = polylactic acid ("PLA") MFR (210°C, 2.16kg)=35g/10min, $\Delta H$=45 J/g, $Tm_2$=167°C;

iii-2 = polyhydroxybutyrate-valerate ("PHBHV") MFR (210°C, 2.16kg)=28g/10min, $\Delta H$=88 J/g, $Tm_2$=170°C;

iii-3 = polylactic acid ("PLA") MFR (210°C, 2.16kg)=3.5g/10min $\Delta H$=0.7 J/g, $Tm_2$=165°C;

iii-4 = polylactic acid ("PLA") MFR (210°C, 2.16kg)=80g/10min $\Delta H$=31 J/g, $Tm_2$=164°C;

iv-1 = micronized talcum powder with an average diameter of 1.1 microns (particle distribution measured by Sedigraph according to ISO 13317-3) commercial grade Jetfine 3CA from Imerys;

iv-2 = micronized talcum powder with an average diameter of 1.9 microns (particle distribution measured by Sedigraph according to ISO 13317-3) commercial grade Mistron R10C from Imerys;

iv-3 = Aktifit VM, vinyl silane-modified kaolin from the Hoffmann Group,

v-1 = Carbodilite HMV15CA from Nisshinbo Chemical Inc;

v-2 = masterbatch comprising 10% by weight of Joncryl ADR4368CS (styrene - glycidyl ether - methyl methacrylate copolymer) and 90% by weight of component ii-1;

vi-1 = oleamide of plant origin (process coadjuvants)

vi-2 = Poly(1,4-butylene adipate-co-1,4-butylene terephthalate) ("PBTA", diol acid polyester other than polyesters i. and ii.)

EXAMPLES:

Examples of Components i. -v.

• i-1 = Poly(1,4-butylene succinate-co-azelate) ("PBSAz10")

11655 g of 1,4-butanediol, 11865 g of succinic acid, 2100 g of azelaic acid, 20,5 g of glycerin and 2,0 g of an 80% by weight ethanolic solution of diisopropyl triethanolamino titanate (containing 8,2% by weight of titanium) was loaded, in a diol/dicarboxylic acid molar ratio (MGR) of 1.15 into a steel reactor with a geometric capacity of 60 liters, equipped with a mechanical stirring system, an inlet for nitrogen, a distillation column, an abatement system for high boiling distillates and a connection to a high vacuum system. The temperature of the mass was gradually raised to 230°C over a period of 120 minutes. When 95% of the theoretical water had been distilled, 20 g of tetra n-butyl titanate was added (corresponding to 140 ppm of metal compared to the amount of poly(1,4-butylene succinate) theoretically obtainable by converting all the succinic acid fed to the reactor). The reactor temperature was then raised to 235-240°C and the pressure was gradually reduced to below 2 mbar over 60 minutes. The reaction was allowed to proceed for as long as necessary to obtain a poly(1,4-butylene succinate-co-1,4-butylene azelate) with an MFR of about 6 g/10 min (at 190 °C and 2.16 kg), and then the material was discharged into a water bath in the form of a strand and granulated.

• i-2 = Poly(1,4-butylene succinate-co-azelate) ("PBSAz20")

11130 g of 1,4-butanediol, 10150 g of succinic acid, 4045 g of azelaic acid, 19,8 g of glycerin and 2,0 g of an 80% by weight ethanolic solution of diisopropyl triethanolamino titanate (containing 8.2% by weight of titanium) were loaded, in a diol/dicarboxylic acid molar ratio (MGR) of 1.15 into a steel reactor with a geometric capacity of 60 liters, equipped with a mechanical stirring system, an inlet for nitrogen, a distillation column, an abatement system for high boiling distillates and a connection to a high vacuum system. The temperature of the mass was gradually raised to 230°C over a period of 120 minutes. When 95% of the theoretical water had been distilled off, 20 g of tetra n-butyl titanate is added (corresponding to 140 ppm of metal compared to the amount of poly(1,4-butylene succinate) theoretically obtainable by converting all the succinic acid fed to the reactor). The reactor temperature was then raised to 235-240°C and the pressure was gradually reduced to below 2 mbar over 60 minutes. The reaction was allowed to proceed for as long as necessary to obtain a poly(1,4-butylene succinate-co-1,4-butylene azelate) with an MFR of about 8 g/10 min (at 190 °C and 2.16 kg), and then the material was discharged into a water bath in the form of a strand and granulated.

• ii-1 = Poly(1,4-butylene succinate) ("PBS").

14000 g of 1,4-butanediol, 17150 g of succinic acid, 26.75 g of glycerin and 2.0 g of an 80% by weight ethanolic solution of diisopropyl triethanolamino titanate (containing 8.2% by weight of titanium) were loaded, in a diol/dicarboxylic acid molar ratio (MGR) of 1.08, into a steel reactor with a geometric capacity of 60 liters, equipped with a mechanical stirring system, an inlet for nitrogen, a distillation column, an abatement system for high boiling distillates and a connection to a high vacuum system. The temperature of the mass was gradually raised to 230°C over a period of 120 minutes. When 95% of the theoretical water had been distilled off, 21.25 g tetra n-butyl titanate was added (corresponding to 119 ppm of metal compared to the amount of poly(1,4-butylene succinate) theoretically obtainable by converting all the succinic acid fed to the reactor). The reactor temperature was then raised to 235-240°C and the pressure was gradually reduced to below 2 mbar over 60 minutes. The reaction was allowed to proceed for as long as necessary to obtain a poly(1,4-butylene succinate) with an MFR of approximately 7 g/10 min (at 190 °C and 2.16 kg), and then the material was discharged into a water bath in the form of a strand and granulated.

• vi-2 = Poly(1,4-butylene adipate-co-1,4-butylene terephthalate) ("PBAT")

7453 g of terephthalic acid, 7388 g of adipic acid, 12033 g of 1,4-butanediol, 4.4 g of glycerine and 3.4 g of a 80% by weight ethanolic solution of diisopropyl triethanolamine titanate (Tyzor TE containing 8.2% by weight of Titanium) were added in a diol/dicarboxylic acid molar ratio (MGR) of 1.40 to a steel reactor having a geometrical capacity of 60 litres fitted with a mechanical stirring system, an inlet for nitrogen, a distillation column, a knock-down system for high boiling point distillates and a connection to a high vacuum system. The temperature of the mass was gradually raised to 230°C over a period of 120 minutes. When 95% of the theoretical water had been distilled off, 17.0 g of tetra n-butyl titanate (corresponding to 119 ppm of metal with respect to the quantity of poly(1,4-butylene adipate-co-1,4-butylene terephthalate) which could theoretically be obtained by converting all the adipic acid and the terephthalic acid fed to the reactor) were added. The temperature of the reactor was then raised to 235-240°C and the pressure was reduced gradually to reach a value of less than 2 mbar over a period of 60 minutes. The reaction was allowed to proceed for the time necessary to obtain a poly (1,4-butylene adipate-co-1,4-butylene terephthalate) with a MFR of approximately 6 g/10 minutes, measured at 190°C and 2.16 kg, and then the material was discharged into a water bath in the form of a string and granulated.

Examples of the production of injection molded articles comprising the composition according to the present invention; (1-2 invention, 3-4 comparative).

Table 1 - Composition Examples 1-5

| Example | i-1 | i-2 | ii-1 | iii-1 | iii-2 | iii-3 | iii-4 | iv-1 | iv-2 | iv-3 | v-1 | v-2 | vi-1 | vi-2 |
|---|---|---|---|---|---|---|---|---|---|---|---|---|---|---|
| 1 | - | 30 | 24.9 | 27.2 | - | - | - | 17.3 | - | - | - | - | 0.6 | - |
| 2 | 54.9 | - | | 27.2 | - | - | - | 17.3 | - | - | - | - | 0.6 | - |
| 3 (comparative) | - | 30 | 24.9 | - | - | 27.2 | - | 17.3 | - | - | - | - | 0.6 | - |
| 4 (comparative) | - | - | 47.1 | - | - | 16 | - | | 36.1 | - | 0.2 | - | - | - |
| 5 (comparative) | - | - | 55 | - | - | - | 25 | - | - | 10 | - | - | - | 10 |

The composition in Table 1 was fed to a co-rotating twin-screw extruder model Icma San Giorgio MCM 25 HT operating under the following conditions:

Screw diameter (D) = 25 mm;
LID = 52;
Screw rotation = 200 rpm;
Thermal profile = 110-150-190-200x5-190x3-170x3;
Flow rate 10.1 kg/h;
Vacuum degassing.

The granules obtained from the extrusion process were fed to an injection molding machine model Engel Victory 120 for the production of wafers (width 70 mm, length 80 mm, thickness 1 mm) conforming to standard ISO 294-3 Type D1.

The operating conditions for obtaining 1 mm thick plates are described below:

Injection T°C = 200°C (Ex. 1, 2 and 4), 190°C (Ex. 3), 210°C (Ex. 5);
Approx. filling pressure = 1400 bar (Ex. 1, 2 and 4); 1300 bar (Ex. 3), 1600 bar (Ex. 5);
Approx. filling time = 1 sec (Ex. 1, 2, 3, 4 and 5)
Holding or packing pressure = 600 bar (Ex. 1, 2, 4 and 5); 400 bar (Ex. 3);
Holding time under packing pressure = 5 sec (Ex. 1, 2, 4 and 5); 6 sec (Ex. 3);
Cooling time = 9 sec (Ex. 1, 2, 4 and 5); 14 sec (Ex. 3);
Approx. cycle time = 18 sec (Ex. 1, 2, 4 and 5); 24 sec (Ex. 3);
rpm = 95 rpm (Ex. 1, 2, 3, 4 and 5);

Wafers with a width of 70 mm, a length of 80 mm and a thickness of 0.6 mm conforming to standard ISO 294-3 Type D1 were also produced by feeding the granules to an Engel Victory 120 injection molding machine. The operating conditions for obtaining the 0.6 mm thick wafers are described below:

Injection T°C = 220°C (Ex. 1, 2 and 4), 210°C (Ex. 3), 240°C (Ex. 5);
Approx. filling pressure = 1200 bar (Ex. 1, 2 and 4); 900 bar (Ex. 3), 1400 bar (Ex. 5);
Approx. filling time = 0.5 sec (Ex. 1, 2, 3, 4 and 5)
Holding or packing pressure = 800 bar (Ex. 1, 2, 4 and 5); 500 bar (Ex. 3);
Holding time under packing pressure = 4 sec (Ex. 1, 2, 4 and 5); 5 sec (Ex. 3);
Cooling time = 10 sec (Ex. 1, 2, 4 and 5); 15 sec (Ex. 3);
Approx. cycletime = 20 sec (Ex. 1, 2, 4 and 5); 25 sec (Ex. 3);
rpm = 95 rpm (Ex. 1, 2, 3, 4 and 5);

From the plates (length 80 mm, width 70 mm) with thicknesses of 1 mm and 0.6 mm obtained by injection, bars (length 30 mm, width 6 mm) having both thicknesses were obtained. They were then subjected to dynamic-mechanical analysis (DMTA) in torsional mode using a TA Instrument's Ares G2 rotational rheometer. The samples were heated at 3°C/min from 25°C to 120°C imposing a strain of 0.1% and a frequency of 1 Hz. The injection molded compositions were characterized at 70°C.

Table 2 - DMTA characterization

| | G' @ 70°C (Mpa) | |
|---|---|---|
| Examples | Plate thickness 1 mm | Plate thickness 0.6 mm |
| 1 | 134 | 155 |
| 2 | 132 | 154 |
| 3 (comparative) | 94 | 103 |
| 4 (comparative) | 472 | 556 |
| 5 (comparative) | 63 | 71 |

The 0.6mm thick plates were tested to determine their disintegration under industrial composting conditions. The test was conducted according to ISO20200:2004 over a period of 91 days. The samples were cut into squares of about 2.5cm side, mixed with synthetic waste and incubated at 58°C. At the end of the test, the compost mass was sieved and the residues recovered, cleaned as much as possible and weighed. The difference in weight (start-end test) constituted the Disintegration of the sample.

Table 3 - Disintegration test

| Examples | Weight loss after 90 days at 58°C |
|---|---|
| 1 | > 90% |
| 2 | > 90% |
| 3(comparative) | > 90% |
| 4 (comparative) | < 90% |

**Claims**

1. A biodegradable polymer composition for the production of molded articles comprising, with respect to the total composition:

   i) 5-70% by weight, with respect to the sum of components i.-v., of at least one polyester comprising:

   a. dicarboxylic component comprising, in relation to the total dicarboxylic component,

   (a1) 0-20% by moles, preferably 0-10% by moles, of units derived from at least one aromatic dicarboxylic acid
   (a2) 53-95% by moles of succinic acid units,
   (a3) 5-27% by moles of units derived from at least one saturated C5-C24 dicarboxylic acid

   b. a diol component comprising, compared to the total diol component:

   (b1) 95-100% by moles, preferably 97-100% by moles, of units derived from at least one saturated aliphatic diol;
   (b2) 0-5% by moles, preferably 0-3% by moles, of units derived from at least one unsaturated aliphatic diol;

   ii) 0-40 % by weight, with respect to the sum of components i.-v., of at least one polyester comprising:

   c. a dicarboxylic component having 100% by moles of succinic acid
   d. a diol component comprising, compared to the total diol component:

   (d1) 95-100% by moles, preferably 97-100% by moles, of units derived from at least one saturated aliphatic diol;

(d2) 0-5% by moles, preferably 0-3% by moles, of units derived from at least one unsaturated aliphatic diol;

iii) 23-43% by weight of the sum of components i.-v., of at least one polyhydroxyalkanoate;
iv) 10-20% by weight, relative to the sum of components i.-v., of at least one filler.
v) 0 - 0.5% by weight, relative to the sum of components i.-v., of at least one cross-linking agent and/or chain extender;

wherein component iii. has a melting point (Tm2) ≥160°C and a (ΔHm) ≥10 J/g determined as indicated in the specification.

2. The biodegradable polymer composition for the production of i molded articles according to claim 1 wherein polyester i) comprises one or more molecules with multiple functional groups, in amounts between 0.05 and 3% by moles to total moles of the dicarboxylic component, for the purpose of obtaining branched products.

3. The biodegradable polymer composition for producing molded articles according to claim 2 wherein the one or more molecules with multiple functional groups are chosen from the group consisting of glycerol, pentaerythritol, trimethylolpropane, citric acid, dipentaerythritol, monoanhydrosorbitol, monohydromannitol, acid triglycerides or polyglycerols.

4. The polymer composition for the production of molded articles according to claim 1 wherein saturated aliphatic dicarboxylic acids other than succinic acid (component a3) are preferably selected from the group consisting of $C_5$-$C_{24}$, preferably $C_5$-$C_{13}$, more preferably $C_7$-$C_{11}$, saturated dicarboxylic acids, their $C_1$-$C_{24}$, preferably $C_1$-$C_4$, alkyl esters, their salts and mixtures thereof.

5. The polymer composition for producing injection molded articles according to claim 1 wherein saturated aliphatic dicarboxylic acids other than succinic acid (component a3) are selected from the group consisting of: 2-ethylsuccinic acid, glutaric acid, 2-methylglutaric acid, adipic acid, pimelic acid, suberic acid, azelaic acid, sebacic acid, undecandioic acid, dodecandioic acid, brassylic acid and their $C_1$-$C_{24}$ alkyl esters.

6. The polymer composition for the production of molded articles according to claim 1 wherein polyester i) comprises at least one aliphatic polyester (AP), preferably poly(1,4-butylene adipate-co-1,4-butylene succinate), poly(1,4-butylene azelate-co-1,4-butylene succinate), poly(1,4-butylene sebacate-co-1,4-butylene succinate), poly(1,4-butylene succinate-co-1,4-butylene adipate-co-1,4-butylene azelate), poly(1,4-butylene succinate-co-1,4-butylene adipate-co-1,4-butylene sebacate), poly(1,4-butylene succinate-co-1,4-butylene azelate-co-1,4-butylene sebacate).

7. The polymer composition according to claim 1 for the production of molded articles wherein the aliphatic polyester i. is poly(1,4-butylene succinate-co-1,4 butylene azelate) and polyester ii. is poly(1,4-butylene succinate).

8. The polymer composition for producing molded articles according to any one of the preceding claims wherein the polyhydroxyalkanoate (component iii.) is selected from the group consisting of polyesters of lactic acid, polyhydroxybutyrate, polyhydroxybutyrate-valerate, polyhydroxybutyrate-propanoate, polyhydroxybutyrate-hexanoate, polyhydroxybutyrate-decanoate, polyhydroxybutyrate-dodecanoate, polyhydroxybutyrate-hexadecanoate, polyhydroxybutyrate-octadecanoate, poly 3 -hydroxybutyrate-4-hydroxybutyrate.

9. The polymer composition for producing molded articles according to any one of the preceding claims wherein the polyhydroxyalkanoate (component iii) has an enthalpy of fusion (ΔHm) in the range from 10 to 93 J/g, more preferably 10 to 50 J/g and a Melting point in the range from 160 to 200°C, more preferably 160 to 180°C.

10. The polymer composition for producing molded articles according to any one of the preceding claims wherein the polyhydroxyalkanoate (component iii) is a lactic acid polyester comprising at least 97% w/w of units derived from L-lactic acid, ≤ 3% w/w of repeating units derived from D-lactic acid, has a Melting point ($Tm_2$) in the range 160-200°C, more preferably 160-180°C, a Glass Transition Temperature (Tg) in the range 55-65°C and a MFR (measured according to standard ASTM-D1238 at 210°C and 2.16 kg) in the range 20-100 g/10 min.

11. The polymer composition for producing molded articles according to any one of the preceding claims wherein the filler (component iv) is selected from the group consisting of kaolin, wollastonite, barytes, clay, talc, calcium and magnesium carbonates, iron and lead carbonates, aluminum hydroxide, diatomaceous earth, aluminum sulfate, barium sulfate, silica, mica, titanium dioxide, starch, chitin, chitosan, alginates, proteins such as gluten, zein, casein, collagen, gelatin and natural gums.

12. The polymer composition for producing molded articles according to any of the preceding claims wherein the filler (component iv.) is selected from the group consisting of talc, calcium carbonate, silica, kaolin, wollastonite, and mixtures thereof present in the form of particles having an arithmetic mean diameter, measured across the major axis of the particle of less than 10 microns.

13. The polymer composition for producing molded articles according to any of the preceding claims wherein the crosslinking agent and/or chain extender (component v.) is selected from the group consisting of compounds having two or more functional groups bearing isocyanate, peroxide, carbodiimide, isocyanurate, oxazoline, epoxide, anhydride, divinylether groups and mixtures thereof.

14. Molded articles comprising the polymer composition in claim 1 having properties of resistance to deformation at high temperature, and capable of disintegration according to EN13432 in thicknesses up to 1mm.

15. Molded articles comprising the polymer composition in claim 1 preferably **characterized by** a THF content of less than 30 mg/kg, preferably less than 10 mg/kg, and more preferably < 5 mg/kg, thereby being capable of being used in contact with foodstuffs, as is the case, for example, with disposable cutlery.

16. Articles molded by injection molding comprising the polymer composition in claim 1 selected from the group consisting of disposable cutlery, plates and cups, rigid containers, capsules for dispensing beverages, preferably hot beverages, caps and lids, packaging for food which can be heated in conventional and microwave ovens.

17. Thermoformed articles comprising the polymer composition in claim 1 selected from the group consisting of containers, trays, plates, beverage dispensing capsules and printed circuit boards for electronics.

18. A process for the injection molding of articles in claims 14)-16) carried out in the absence of annealing heat treatment, wherein said articles are **characterized by** a conservative elastic modulus (G') 70°C of over 100 MPa determined as indicated in the specification.

**Patentansprüche**

1. Biologisch abbaubare Polymerzusammensetzung zur Herstellung von Formkörpern, umfassend, bezogen auf die gesamte Zusammensetzung:

   i) 5-70 Gew.-%, bezogen auf die Summe der Komponenten i.-v., mindestens eines Polyesters, umfassend:

      a. eine Dicarbonsäurekomponente, umfassend, bezogen auf die gesamte Dicarbonsäurekomponente:

         (a1) 0-20 Mol-%, bevorzugt 0-10 Mol-%, Einheiten, die von mindestens einer aromatischen Dicarbonsäure abgeleitet sind,
         (a2) 53-95 Mol-% Succinylsäureeinheiten,
         (a3) 5-27 Mol-% Einheiten, die von mindestens einer gesättigten C5-C24-Dicarbonsäure abgeleitet sind;

      b. eine Diolkomponente, umfassend, bezogen auf die gesamte Diolkomponente:

         (b1) 95-100 Mol-%, bevorzugt 97-100 Mol-%, Einheiten, die von mindestens einem gesättigten aliphatischen Diol abgeleitet sind,
         (b2) 0-5 Mol-%, bevorzugt 0-3 Mol-%, Einheiten, die von mindestens einem ungesättigten aliphatischen Diol abgeleitet sind;

   ii) 0-40 Gew.-%, bezogen auf die Summe der Komponenten i.-v., mindestens eines Polyesters, umfassend:

      c. eine Dicarbonsäurekomponente mit 100 Mol-% Succinylsäure,

d. eine Diolkomponente, umfassend, bezogen auf die gesamte Diolkomponente:

(d1) 95-100 Mol-%, bevorzugt 97-100 Mol-%, Einheiten, die von mindestens einem gesättigten aliphatischen Diol abgeleitet sind,

(d2) 0-5 Mol-%, bevorzugt 0-3 Mol-%, Einheiten, die von mindestens einem ungesättigten aliphatischen Diol abgeleitet sind;

iii) 23-43 Gew.-%, bezogen auf die Summe der Komponenten i.-v., mindestens eines Polyhydroxyalkanoats;

iv) 10-20 Gew.-%, bezogen auf die Summe der Komponenten i.-v., mindestens eines Füllstoffs;

v) 0-0,5 Gew.-%, bezogen auf die Summe der Komponenten i.-v., mindestens eines Vernetzungsmittels und/oder Kettenverlängerers;

wobei Komponente iii. einen Schmelzpunkt (Tm2) >160°C und ein ($\Delta$Hm) >10 J/g, bestimmt wie in der Beschreibung angegeben, aufweist.

2. Biologisch abbaubare Polymerzusammensetzung zur Herstellung von Formkörpern gemäß Anspruch 1, wobei Polyester i) ein oder mehrere Moleküle mit mehreren funktionellen Gruppen in Mengen zwischen 0,05 und 3 Mol-%, bezogen auf die Gesamtmolzahl der Dicarbonsäurekomponente, umfasst, um verzweigte Produkte zu erhalten.

3. Biologisch abbaubare Polymerzusammensetzung zur Herstellung von Formkörpern gemäß Anspruch 2, wobei das eine oder die mehreren Moleküle mit mehreren funktionellen Gruppen aus der Gruppe ausgewählt sind, die aus Glycerin, Pentaerythrit, Trimethylolpropan, Citronensäure, Dipentaerythrit, Monoanhydrosorbit, Monohydromannit, sauren Triglyceriden oder Polyglycerinen besteht.

4. Polymerzusammensetzung zur Herstellung von Formkörpern gemäß Anspruch 1, wobei andere gesättigte aliphatische Dicarbonsäuren als Succinylsäure (Komponente a3) bevorzugt aus der Gruppe ausgewählt sind, die aus gesättigten $C_5$-$C_{24}$-, bevorzugt $C_5$-$C_{13}$-, mehr bevorzugt $C_7$-$C_{11}$-Dicarbonsäuren, deren $C_1$-$C_{24}$-, bevorzugt $C_1$-$C_4$-Alkylestern, deren Salzen und Mischungen davon besteht.

5. Polymerzusammensetzung zur Herstellung von Spritzgussgegenständen gemäß Anspruch 1, wobei andere gesättigte aliphatische Dicarbonsäuren als Succinylsäure (Komponente a3) aus der Gruppe ausgewählt sind, die aus 2-Ethylsuccinylsäure, Glutarsäure, 2-Methylglutarsäure, Adipinsäure, Pimelinsäure, Suberinsäure, Azelainsäure, Sebacinsäure, Undecandisäure, Dodecandisäure, Brassylsäure und deren $C_1$-$C_{24}$-Alkylestern besteht.

6. Polymerzusammensetzung zur Herstellung von Formkörpern gemäß Anspruch 1, wobei Polyester i) mindestens einen aliphatischen Polyester (AP) umfasst, bevorzugt Poly(1,4-butylenadipat-co-1,4-butylensuccinat), Poly(1,4-butylenazelat-co-1,4-butylensuccinat), Poly(1,4-butylensebacat-co-1,4-butylensuccinat), Poly(1,4-butylensuccinat-co-1,4-butylenadipat-co-1,4- butylenazelat), Poly(1,4-butylensuccinat-co-1,4-butylenadipat-co-1,4-butylensebacat), Poly(1,4-butylensuccinat-co-1,4-butylenazelat-co-1,4-butylensebacat).

7. Polymerzusammensetzung zur Herstellung von Formkörpern gemäß Anspruch 1, wobei der aliphatische Polyester i. Poly(1,4-butylensuccinat-co-1,4-butylenazelat) ist und der Polyester ii. Poly(1,4-butylensuccinat) ist.

8. Polymerzusammensetzung zur Herstellung von Formkörpern gemäß einem der vorhergehenden Ansprüche, wobei das Polyhydroxyalkanoat (Komponente iii.) aus der Gruppe ausgewählt ist, die aus Polyestern der Milchsäure, Polyhydroxybutyrat, Polyhydroxybutyrat-valerat, Polyhydroxybutyrat-propanoat, Polyhydroxybutyrathexanoat, Polyhydroxybutyrat-decanoat, Polyhydroxybutyrat-dodecanoat, Polyhydroxybutyrat-hexadecanoat, Polyhydroxybutyrat-octadecanoat, Poly-3-hydroxybutyrat-4-hydroxybutyrat besteht.

9. Polymerzusammensetzung zur Herstellung von Formkörpern gemäß einem der vorhergehenden Ansprüche, wobei das Polyhydroxyalkanoat (Komponente iii) eine Schmelzenthalpie ($\Delta$Hm) im Bereich von 10 bis 93 J/g, mehr bevorzugt 10 bis 50 J/g, und einen Schmelzpunkt im Bereich von 160 bis 200°C, mehr bevorzugt 160 bis 180°C, aufweist.

10. Polymerzusammensetzung zur Herstellung von Formkörpern gemäß einem der vorhergehenden Ansprüche, wobei das Polyhydroxyalkanoat (Komponente iii) ein Milchsäurepolyester ist, der mindestens 97% (w/w) von L-Milchsäure abgeleitete Einheiten, $\leq$ 3% (w/w) von D-Milchsäure abgeleitete Wiederholungseinheiten umfasst, einen Schmelzpunkt (Tm$_2$) im Bereich von 160-200°C, mehr bevorzugt 160-180°C, eine Glasübergangstemperatur (Tg) im Bereich von 55-65°C und einen MFR (gemessen gemäß der Norm ASTM-D1238 bei 210°C und 2.16 kg) im Bereich von 20-100 g/10 min aufweist.

11. Polymerzusammensetzung zur Herstellung von Formkörpern gemäß einem der vorangehenden Ansprüche, wobei der Füllstoff (Komponente iv) aus der Gruppe ausgewählt ist, die aus Kaolin, Wollastonit, Baryt, Ton, Talk, Calcium- und Magnesiumcarbonaten, Eisen- und Bleicarbonaten, Aluminiumhydroxid, Diatomeenerde, Aluminiumsulfat, Bariumsulfat, Siliciumoxid, Glimmer, Titandioxid, Stärke, Chitin, Chitosan, Alginaten, Proteinen wie Gluten, Zein, Casein, Kollagen, Gelatine und natürlichen Gummis besteht.

12. Polymerzusammensetzung zur Herstellung von Formkörpern gemäß einem der vorhergehenden Ansprüche, wobei der Füllstoff (Komponente iv.) aus der Gruppe ausgewählt ist, die aus Talk, Calciumcarbonat, Siliciumoxid, Kaolin, Wollastonit und Mischungen davon besteht, in Form von Partikeln mit einem arithmetischen mittleren Durchmesser, gemessen über die Hauptachse des Partikels, von weniger als 10 Mikrometern vorliegt.

13. Polymerzusammensetzung zur Herstellung von Formkörpern gemäß einem der vorhergehenden Ansprüche, wobei das Vernetzungsmittel und/oder der Kettenverlängerer (Komponente v.) aus der Gruppe ausgewählt ist, die aus Verbindungen mit zwei oder mehr funktionellen Gruppen, die Isocyanat-, Peroxid-, Carbodiimid-, Isocyanurat-, Oxazolin-, Epoxid-, Anhydrid-, Divinylethergruppen und Mischungen davon tragen, besteht.

14. Formkörper, umfassend die Polymerzusammensetzung gemäß Anspruch 1, mit Eigenschaften der Beständigkeit gegen Verformung bei hoher Temperatur und mit der Fähigkeit zur Desintegration gemäß EN13432 in Dicken bis zu 1 mm.

15. Formkörper, umfassend die Polymerzusammensetzung gemäß Anspruch 1, bevorzug **gekennzeichnet durch** einen THF-Gehalt von weniger als 30 mg/kg, bevorzugt weniger als 10 mg/kg und mehr bevorzugt < 5 mg/kg, wodurch sie in Kontakt mit Lebensmitteln verwendet werden können, wie es beispielsweise bei Einwegbesteck der Fall ist.

16. Gegenstand, geformt durch Spritzgießen, umfassend die Polymerzusammensetzung gemäß Anspruch 1, ausgewählt aus der Gruppe, bestehend aus Einwegbesteck, Einwegtellern und Einwegtassen, starren Behältern, Kapseln zur Abgabe von Getränken, bevorzugt Heißgetränken, Verschlüssen und Deckeln, Verpackungen für Lebensmittel, die in herkömmlichen Öfen und Mikrowellenöfen erhitzt werden können.

17. Thermogeformte Gegenstände, umfassend die Polymerzusammensetzung gemäß Anspruch 1, ausgewählt aus der Gruppe, bestehend aus Behältern, Tabletts, Tellern, Kapseln für die Getränkeabgabe und gedruckten Leiterplatten für die Elektronik.

18. Verfahren zum Spritzgießen von Gegenständen gemäß den Ansprüchen 14 bis 16, das in Abwesenheit einer Temperbehandlung durchgeführt wird, wobei die Gegenstände durch einen konservativen Elastizitätsmodul (G') bei 70°C von über 100 MPa, gemessen wie in der Beschreibung angegeben, gekennzeichnet sind.

**Revendications**

1. Composition polymère biodégradable pour la production d'articles moulés comprenant, par rapport à la composition totale :

    i) de 5 à 70 % en poids, par rapport à la somme de composants i.-v., d'au moins un polyester comprenant :

        a. un composant dicarboxylique comprenant, par rapport au composant dicarboxylique total,

            (a1) de 0 à 20 % en mole, de préférence de 0 à 10 % en mole, d'unités dérivées d'au moins un acide dicarboxylique aromatique,
            (a2) de 53 à 95 % en mole d'unités d'acide succinique,
            (a3) de 5 à 27 % en mole d'unités dérivées d'au moins un acide dicarboxylique saturé en $C_5$-$C_{24}$

        b. un composant diol comprenant, par rapport au composant diol total :

            (b1) de 95 à 100 % en mole, de préférence de 97 à 100 % en mole, d'unités dérivées d'au moins un diol aliphatique saturé ;

(b2) de 0 à 5 % en mole, de préférence de 0 à 3 % en mole, d'unités dérivées d'au moins un diol aliphatique insaturé ;

ii) de 0 à 40 % en poids, par rapport à la somme des composants i.-v., d'au moins un polyester comprenant :

c. un composant dicarboxylique présentant 100 % en moles d'acide succinique
d. un composant diol comprenant, par comparaison au composant diol total :

(d1) de 95 à 100 % en mole, de préférence de 97 à 100 % en mole, d'unités dérivées d'au moins un diol aliphatique saturé ;
(d2) de 0 à 5 % en mole, de préférence de 0 à 3 % en mole, d'unités dérivées d'au moins un diol aliphatique insaturé ;

iii) de 23 à 43 % en poids de la somme de composants i.-v., d'au moins un polyhydroxyalcanoate ;
iv) de 10 à 20 % en poids, par rapport à la somme des composants i.-v., d'au moins une charge ;
v) de 0 à 0,5 % en poids, par rapport à la somme des composants i.-v., d'au moins un agent de réticulation et/ou rallonge de chaîne ;

dans lequel le composant iii. présente un point de fusion (Tm2)$\geq$160°C et une ($\Delta$Hm)$\geq$10 J/g déterminée comme indiqué dans la description.

2. Composition polymère biodégradable pour la production d'articles moulés selon la revendication 1, dans laquelle le polyester i) comprend une ou plusieurs molécules avec de multiples groupes fonctionnels, en des quantités comprises entre 0,05 et 3 % en mole par rapport aux moles totales du composant dicarboxylique, dans le but d'obtenir des produits ramifiés.

3. Composition polymère biodégradable pour produire des articles moulés selon la revendication 2, dans laquelle les une ou plusieurs molécules avec de multiples groupes fonctionnels sont choisies dans le groupe consistant en du glycérol, du pentaérythritol, du triméthylolpropane, de l'acide citrique, du dipentaérythritol, du monoanhydrosorbitol, du monohydromannitol, des triglycérides acides ou des polyglycérols.

4. Composition polymère pour la production d'articles moulés selon la revendication 1, dans laquelle les acides dicarboxyliques aliphatiques saturés autres que l'acide succinique (composant a3) sont de préférence choisis dans le groupe consistant en $C_5$-$C_{24}$, de préférence $C_5$-$C_{13}$, plus préférentiellement des acides dicarboxyliques saturés en $C_7$-$C_{11}$, leurs esters d'alkyle en $C_1$-$C_{24}$, de préférence en $C_1$-$C_4$, leurs sels et des mélanges de ceux-ci.

5. Composition polymère pour produire des articles moulés par injection selon la revendication 1, dans laquelle des acides dicarboxyliques aliphatiques saturés autres que l'acide succinique (composant a3) sont choisis dans le groupe consistant en : l'acide 2-éthylsuccinique, l'acide glutarique, l'acide 2-méthylgluratique, l'acide adipique, l'acide pimélique, l'acide subérique, l'acide azélaïque, l'acide sébacique, l'acide undécanoïque, l'acide dodécanoïque, l'acide brassylique et leurs esters d'alkyle en $C_1$-$C_{24}$.

6. Composition polymère pour produire des articles moulés selon la revendication 2, dans laquelle le polyester i) comprend au moins un polyester aliphatique (AP), de préférence du poly(1,4-butylène adipate-co-1,4-butylène succinate), du poly(1,4-butylène azélate-co-1,4-butylène succinate), du poly(1,4-butylène sébacate-co-1,4-butylène succinate), du poly(1,4-butylène succinate-co-1,4-butylène adipate-co-1,4-butylène azélate), du poly(1,4-butylène succinate-co-1,4-butylène adipate-co-1,4-butylène sébacate), du poly(1,4-butylène succinate-co-1,4-butylène azélate-co-1,4-butylène sébacate)

7. Composition polymère selon la revendication 1 pour la production d'articles moulés, dans laquelle le polyester aliphatique i. est du poly(1,4-butylène succinate-co-1,4-butylène azélate) et le polyester ii. est du poly(1,4-butylène succinate).

8. Composition polymère pour produire des articles moulés selon l'une quelconque des revendications précédentes, dans laquelle le polyhydroxyalcanoate (composant iii.) est choisi dans le groupe consistant en des polyesters d'acide lactique, du polyhydroxybutyrate, du polyhydroxybutyrate-valérate, du polyhydroxybutyrate propanoate, du polyhydroxybutyrate-hexanoate, du polyhydroxybutyrate-décanoate, du polyhydroxybutyrate-dodécanoate, du polyhydroxybutyrate-hexadécanoate, du polyhydroxybutyrate-octadécanoate, poly-3-hydroxybutyrate 4-hydroxybutyrate.

9. Composition polymère pour produire des articles moulés selon l'une quelconque des revendications précédentes, dans laquelle le polyhydroxyalcanoate (composant iii) présente une enthalpie de fusion (ΔHm) dans la plage allant de 10 à 93 J/g, plus préférentiellement de 10 à 50 J/g et un point de fusion dans la plage allant de 160 à 200°C, plus préférentiellement de 160 à 180°C.

10. Composition polymère pour produire des articles moulés selon l'une quelconque des revendications précédentes, dans laquelle le polyhydroxyalcanoate (composant iii) est un polyester d'acide lactique comprenant au moins 97 % p/p d'unités dérivées de l'acide L-lactique, ≤ 3 % p/p d'unités répétitives dérivées de l'acide D-lactique, présente un point de fusion (Tm2) dans la plage allant de 160 à 200°C, plus préférentiellement de 160 à 180 °C, une température de transition vitreuse (Tg) dans la plage allant de 55 à 65 °C et une MFR (mesurée selon la norme ASTM-D1238 à 210°C et 2,16 kg) dans la plage allant de 20 à 100 g/10 min.

11. Composition polymère pour produire des articles moulés selon l'une quelconque des revendications précédentes, dans laquelle la charge (composant iv) est choisie dans le groupe consistant en du kaolin, de la wollastonite, des barytes, de l'argile, du talc, des carbonates de calcium et de magnésium, des carbonates de fer et de plomb, de l'hydroxyde d'aluminium, de la terre de diatomées, du sulfate d'aluminium, du sulfate de baryum, de la silice, du mica, du dioxyde de titane, de l'amidon, de la chitine, du chitosane, des alginates, des protéines telles que le gluten, la zéine, la caséine, le collagène, la gélatine et les gommes naturelles.

12. Composition polymère pour produire des articles moulés selon l'une quelconque des revendications précédentes, dans laquelle la charge (composant iv.) est choisie dans le groupe consistant en du talc, du carbonate de calcium, de la silice, du kaolin, de la wollastonite et de mélanges de ceux-ci présents sous forme de particules présentant un diamètre moyen arithmétique, mesuré sur l'axe majeur de la particule, inférieur à 10 microns.

13. Composition polymère pour produire des articles moulés selon l'une quelconque des revendications précédentes, dans laquelle l'agent de réticulation et/ou l'allongeur de chaîne (composant v.) est choisi dans le groupe consistant en des composés présentant deux groupes fonctionnels ou plus portant des groupes isocyanate, peroxyde, carbodiimide, isocyanurate, oxazoline, époxyde, anhydride, divinyléther et des mélanges de ceux-ci.

14. Articles moulés comprenant la composition polymère selon la revendication 1 présentant des propriétés de résistance à la déformation à haute température et capables de se désintégrer selon la norme EN13432 dans des épaisseurs allant jusqu'à 1 mm.

15. Articles moulés comprenant la composition polymère selon la revendication 1, caractérisés de préférence par une teneur en THF inférieure à 30 mg/kg, de préférence inférieure à 10 mg/kg, et plus préférentiellement < 5 mg/kg, pouvant ainsi être utilisée au contact de denrées alimentaires, comme c'est le cas par exemple des couverts jetables.

16. Articles moulés par moulage par injection comprenant la composition polymère selon la revendication 1 choisis dans le groupe consistant en des couverts, assiettes et tasses jetables, des récipients rigides, des capsules pour distribuer des boissons, de préférence des boissons chaudes, des bouchons et des couvercles, des emballages pour aliments pouvant être chauffés dans des fours traditionnels et à micro-ondes.

17. Articles thermoformés comprenant la composition polymère selon la revendication 1, choisis dans le groupe consistant en des récipients, plateaux, assiettes, capsules de distribution de boissons et cartes de circuits imprimés pour l'électronique.

18. Procédé de moulage par injection d'articles selon les revendications 14) à 16) réalisé en l'absence de traitement thermique de recuit, dans lequel lesdits articles sont **caractérisés par** un module d'élasticité conservateur (G') à 70°C supérieur à 100 MPa, déterminé comme indiqué dans la description.

**REFERENCES CITED IN THE DESCRIPTION**

**Patent documents cited in the description**

- US 6573340 B
- WO 2005063883 A
- EP 3328940 B1
- US 20130004759 A
- WO 2019034515 A1
- IT MI20140030 A
- WO 2015104375 A
- WO 2015104377 A